Europäisches Patentamt

European Patent Office

Office européen des brevets

(19)

(11) **EP 0 775 894 B1**

(12) **EUROPEAN PATENT SPECIFICATION**

(45) Date of publication and mention
of the grant of the patent:
**25.06.2003 Bulletin 2003/26**

(51) Int Cl.⁷: **G01H 1/00**

(21) Application number: **96307897.7**

(22) Date of filing: **31.10.1996**

(54) **Rotational machinery analysis**

Analyse von rotierenden Maschinen

Analyse des machines rotatives

(84) Designated Contracting States:
**AT DE FR GB IE IT NL SE**

(30) Priority: **22.11.1995 GB 9523868**
**15.04.1996 GB 9607768**

(43) Date of publication of application:
**28.05.1997 Bulletin 1997/22**

(73) Proprietor: **SNAP-ON EQUIPMENT LIMITED**
**King's Lynn Norfolk PE30 5DD (GB)**

(72) Inventors:
• **Jones, Barbara Lynn**
**King's Lynn, Norfolk PE32 1RY (GB)**

• **Wylie, Thomas Francis**
**March, Cambs PE15 8QT (GB)**
• **Hawkins, Marcus John**
**King's Lynn, Norfolk PE31 7LU (GB)**

(74) Representative: **Lamb, Richard Andrew et al**
**Urquhart-Dykes & Lord,**
**New Priestgate House,**
**57 Priestgate**
**Peterborough, Cambs. PE1 1JX (GB)**

(56) References cited:
**EP-A- 0 238 738** | **US-A- 3 911 390**
**US-A- 4 227 403** | **US-A- 4 383 239**
**US-A- 5 396 427**

## Description

This invention relates to rotational machinery analysis, particularly in relation to internal combustion engines and to engine speed measurement. A particular application of the invention is to the measurement of engine speed, particularly in relation to internal combustion engines, notably vehicle engines.

A particular aspect of the invention relates to the provision of a tachometer facility which is well adapted for roadside use by permitting automotive vehicles merely to drive onto the apparatus for RPM measurement at idle and maximum engine speed for smoke measurement purposes.

Presently available workshop methods for measurement of engine speed in vehicles are largely related to the engine in question. Thus, for example, among the approximately 8 or more currently available different methods for measurement of engine speed are included optical-reflective techniques, inductive clamp techniques, primary ignition voltage pick up techniques, battery signal techniques and exhaust pulse-related techniques. Each of these techniques is not in itself applicable to the entire range of engines, and several are unique to one specific engine design.

There is disclosed in US - A - 5,109,700 (Hicho) a method and apparatus for analysing rotating machines in which a vibration transducer is mounted to a rotating machine for sensing vibration thereof. The transducer output signal is passed to an integrator to convert the vibration signal from one that is proportional to acceleration to one that is proportional to velocity. A speed analysis programme identifies frequency bins and provides a control signal to a speed display. Analysis of the condition of the rotating machine is obtained by elimination of frequencies not indicative of its condition and assessment of the amplitude of the remaining frequency. Such a method is relatively complicated and the signal-generating transducer is relatively insensitive and relatively difficult to mount conveniently on the machine to be analysed so as to generate adequate output signals. There is disclosed in EP 96300484.1 (ref P52555EP), a prior-filed but not prior published application of the present applicants, concerning tachometer apparatus in which a piezo-electric element is employed in one embodiment to generate signals utilised for tachometer measurements. Other prior disclosures of the use of piezo-electric sensors include GB 20 49 935 and US 4,173,896 and US 4,577,496 and US 3,798,474 and EP - A - 251 901. However, these prior disclosures of piezo-electric sensing elements do not solve the problem that the signal obtainable from such systems tends to be relatively small in terms of amplitude and relatively inconvenient to obtain in terms of affixing the sensor to the rotary machine. Accordingly, it would be particularly significant if, to take a simple example, means could be provided to obtain tachometer readings having a sufficiently strong and clear signal which can be derived directly from the vehicle wheels merely by driving onto a sensor device.

Accordingly, we have identified a need for a method and apparatus which is more widely and easily applicable than the Hicho system and/or which can be utilised without the need to remove significant amounts of equipment in terms of engine fixtures eg by merely driving a vehicle wheel onto a sensor plate and/or which is relatively low in cost and/or easy to attach and/or which can use multiple attachment points and/or which is low in power consumption and thus is more readily portable than existing equipment and/or which can be applied to both petrol/gasoline and diesel engines.

Accordingly, an object of the present invention is to provide a method and apparatus for rotational machinery analysis, and sensor devices therefor, including offering improvements in relation to one or more of the matters discussed above, and/or improvements generally.

According to the invention there is provided a method and apparatus applicable to rotational machinery analysis as defined in the accompanying claims. A particular aspect of the invention relates to engine RPM measurement, eg for smoke tests.

We have discovered that the output limitations of prior proposals using piezo-electric films as a basis for the production of an EMF or other electric or electronic output can be substantially improved by adopting a modified format for the piezo-electric sensor material. Thus, for example, we have found that by arranging for the engine vibrations to be applied to the piezo-electric material in a manner such as to produce localised loading of that material, there is provided a very significantly improved electric or electronic output. In one embodiment of the invention, the format adopted for the piezo-electric material whereby such localised loading is achieved comprises the use of an elongated element of rope or cable or other strand-like form, so that the vibrations are applied mechanically only to a portion of the external profile of the element.

In an embodiment, the method comprises providing a sensor comprising piezo-electric material and locating same with respect to the engine or a structure connected to an engine so that the element is subject to vibrations or movement produced by the engine during use, whereby an electrical or electronic output of the element is related to engine speed. In this way, the very simple cable or like construction of the piezoelectric sensor element is able to generate electronic responses permitting analysis to be carried out and engine speed to be determined merely by placement or simple mounting on or adjacent to the engine and with relatively simple analysis equipment connected thereto. Gone is the need for inductive clamps or other electronic pick ups. It is enough that the piezoelectric sensor element is subjected to at least a small amplitude vibration at a frequency related to engine speed, and in most situations where the sensor element is mounted on a vibrating structure this results in the application of localised loading of the piezo-electric material.

Accordingly, the embodiments enable analysis to be carried out and engine speed determinations to be made with absolutely no modification to the engine nor any dismounting of equipment.

In the embodiment, the analytical steps are performed with respect to the voltage component of the output of the piezoelectric device, or by reference to the frequency and/or amplitude of the voltage output including, where convenient, reference to a dominant peak component of the output, or the output power spectral density, whereby a ready determination of the engine speed is made.

The piezoelectric sensor element itself is constructed so as to be responsive to oscillatory loading applied at localised locations, so that the application of movement or vibrations or oscillations to it is able to produce at least that degree of loading of the element whereby it can generate an appropriate response, for example a microvoltage. In some of the embodiments described below, the structure of the piezoelectric element itself is of elongate form comparable to that of such devices as used in road traffic census operations. We have ascertained that such a device, suitably modified in terms of size, and when mounted so as to have vibrations applied thereto so as to produce localised loading, is able to respond sufficiently to the relatively low amplitude movement produced by engine vibrations to produce an output which is detectable in terms of voltage and frequency, for example, so that analysis can be carried out and/or a determination can be made of engine speed. In this way, the invention provides an extremely simple means for determining engine speed or performing other analytical steps which eliminates most of the complications of prior art systems.

As to the actual physical form of the piezo-electric sensor element, this may be simply in the form of a cable comprising piezo-electric material, which, in use, is connected to the source of vibrations so as to be subjected to localised loading thereby or, the sensor element may comprise several loops of such cable incorporated into a unitary sensor element, in which, for example, a loading element or plate causes localised loading and compression of the piezo-electric material.

In most embodiments of the invention, the application of the localised loading to the piezo-electric material produces corresponding localised compression thereof leading to the generation of a corresponding electronic output. By providing the piezo-electric material in a format (such as a cable-like form) so as to produce localised loading and thus at least some degree of compression, or by providing the piezo-electric material in association with a loading member having spaced surface formations adapted to apply loadings at spaced positions to the piezo-electric material, the embodiments of the invention provide for an improved electronic output from the sensor material whereby adequate response is achieved without the sophistication in sensitivity of associated response-detection circuits which has hitherto been required.

In one embodiment envisaged for the invention, the sensor element comprises piezo-electric material in elongate form, for example a cable, and the cable being provided in spiral form and sandwiched between a pair of relatively rigid metal plates as a unitary assembly which can be loaded by an automotive vehicle, for example a truck. Thus, in this embodiment, the sandwich-form sensor assembly is adapted to be located below a tyre of a truck to sense vibrations from the diesel engine of the truck. Stop members are provided to limit the localised compressive forces applied to the piezo-electric material between the sandwiching plates, and thus to avoid the possibility of damage to the piezo-electric material in the case of wheel loadings beyond acceptable loading limits for that material. In this embodiment, the localised loading of the piezo-electric cable is produced in a lengthwise-extending fashion along the cable-format element, but is not applied to substantial areas of the periphery of the cable which do not make contact with the loading plates.

In this embodiment, the analysis apparatus is utilised to enable identification of peak engine RPM during a test for engine smoke emission. Accordingly, the method includes the step of identifying the highest engine frequency peak for this purpose. The test is carried out in association with smoke analysis apparatus and simultaneous readings are taken of maximum engine RPM and engine smoke density.

In alternative embodiments, the piezo-electric sensor element may, instead of being in cable form, comprise a sheet-form piezo-electric material suitably arranged to be subjected to localised loadings by vibrations from a rotational machine to be analysed.

Thus, the invention utilises a piezo-electric device which when locally or otherwise compressively loaded produces a voltage across its terminals which alternates at a frequency proportional to the engine speed. Hence with an electronic measurement circuit to determine the frequency produced, it is possible to obtain engine speed or other analytical data. Alternatively, the power spectral density derived from the piezo-electric device's signal can be analysed. This signal contains a dominant peak of which engine speed is a multiple, and it is possible to track this peak over the engine speed range. This can be done by using digital processing electronics.

A particular advantage of the embodiments of the invention described below relates to the ability of the piezo-electric sensor to be easily connected to the vibration source to be assessed or analysed, by transmission through a vehicle tyre to a sensor supporting same.

The enhanced electrical sensitivity of the sensors of the embodiments of the invention leads to an improved signal-to-noise ratio in use, whereby the sensitivity and hence cost of the associated analytical apparatus can be reduced.

Embodiments of the invention will now be described by way of example with reference to the accompanying drawings in which :

Fig 1 shows in block diagram form an embodiment of the invention including a piezo-electric sensor element and associated analytical and display apparatus;

Figs 2 to 7 show the output voltage of a piezo-electric device plotted with respect to time for six different locations, including an embodiment of the invention, of the piezo-electric device as described below; and

Figs 8 and 9 show in block diagram form the functional and constructional aspects of an embodiment of the invention providing a drive-on tachometer facility for use, for example, for smoke measurement in automotive diesel engines.

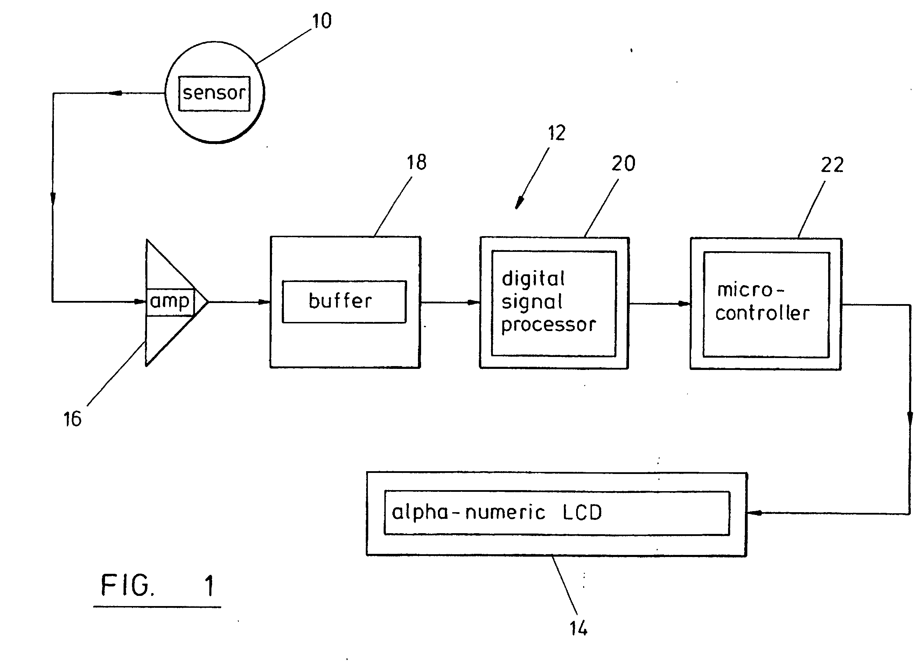

In the work illustrated in Figs. 1 to 7, the apparatus comprises a sensor element in the form of a piezo-electric cable suitably encased in polymeric material such as rubber or plastics and having output electronic conductors for coupling to an analysis circuit. In this apparatus, the elongated form of the piezo-electric sensor element enables vibrations to be applied to it at relatively localised positions where it makes contact with the automotive vehicle in question.

The piezo-electric cable is in this embodiment in the form of a cable obtainable from the firm Kistler Instruments Ltd of Whiteoaks, Whitney, Hampshire, United Kingdom under part designation ANP 1001697-7225-94-8152A211.

As shown in Fig 1 a flexible sensor element 10 is connected to analytical apparatus 12 which is itself coupled to display apparatus 14 in the form of an alphanumeric liquid crystal display.

Analytical apparatus 12 comprises an instrument amplifier 16 feeding to an input buffer 18 which passes the signal to a digital signal processor 20. Processor 20 is coupled via a micro-controller 22 to liquid crystal display 14. Processor 20 processes signals received in accordance with a defined algorithm to produce the rpm display on liquid crystal display 14, in association with an appropriate driver circuit.

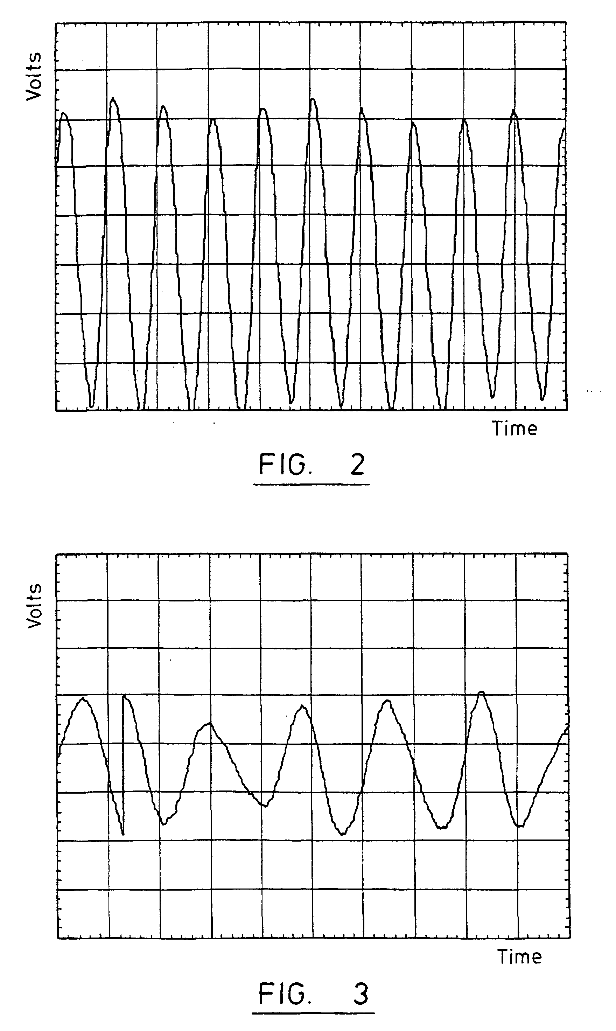

In use, the flexible piezo-electric element 10 has been mounted on the engine or an adjacent structure and the output obtained from it is analysed accordingly with results shown in Figs 2 to 7. Vibrations are applied to element 10 at various locations on its external periphery, these loadings being therefore applied at relatively localised locations.

Fig 2 shows the trace obtained by placing the sensor element under the tyre of the vehicle. This is an embodiment of the invention.

Fig 3 was obtained by placing the sensor on the bonnet or hood of the vehicle. This illustrates examples technically related to the Fig 2 embodiment.

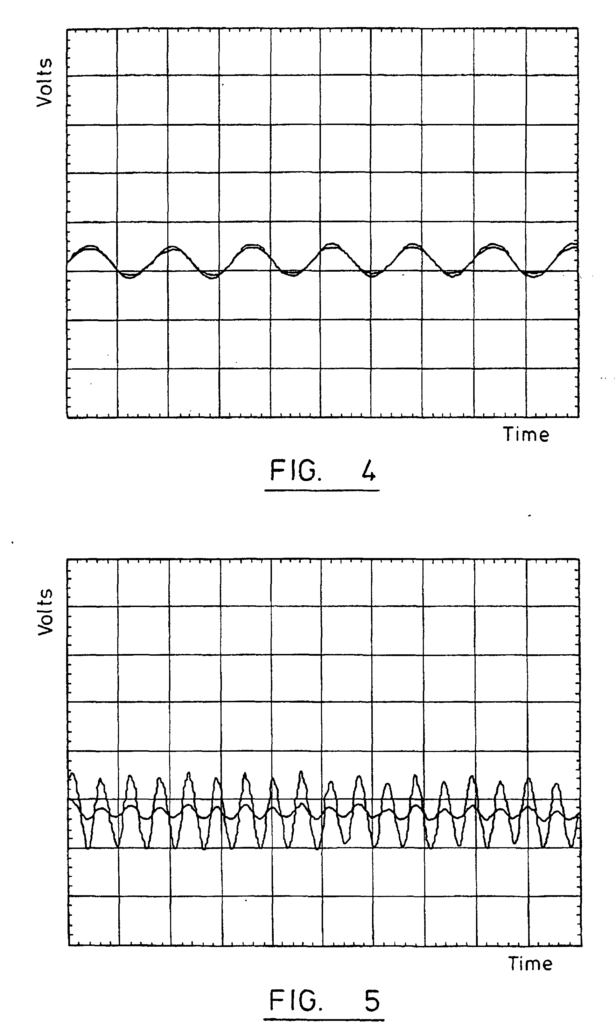

The trace of Fig 4 was obtained by placing the sensor on the outlet pipe of the radiator leading to the engine. This illustrates examples technically related to the Fig 2 embodiment.

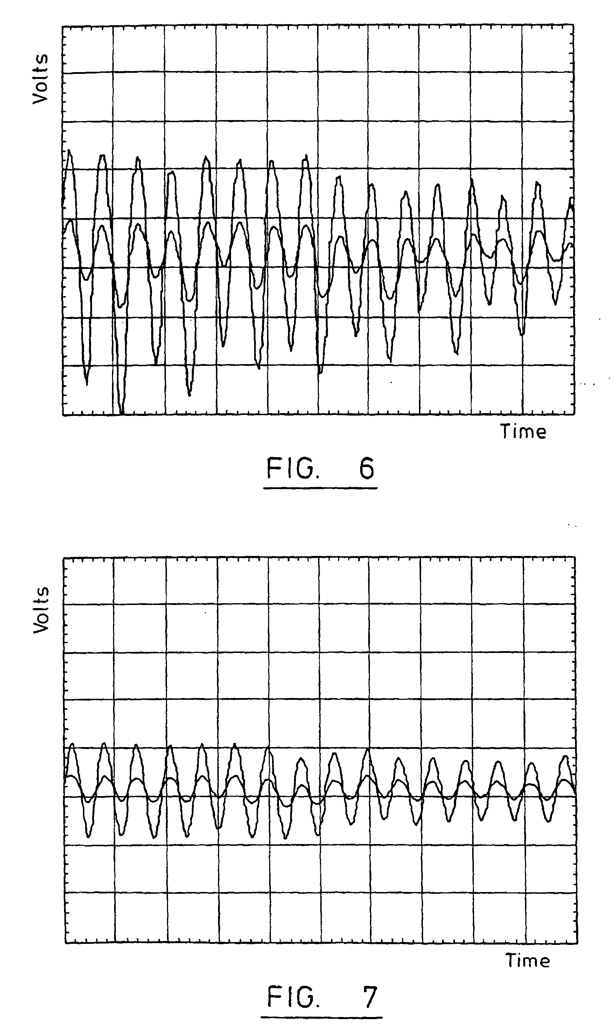

The Fig 5 trace was obtained by placing the sensor on the outlet pipe of the engine to the radiator. This illustrates examples technically related to the Fig 2 embodiment.

The Fig 6 trace was obtained by placing the sensor on the fuel pipe inlet to the carburettor of the vehicle, and the trace of Fig 7 was obtained by trapping the sensor in the driver's side front window of the vehicle. This illustrates examples technically related to the Fig 2 embodiment.

In these cases, the output of the piezo-electric sensor was analysed and displayed as a plot of voltage against time, as shown in the drawings.

Each of the plots of Figs 2 to 7 were in fact obtained from a Fluke oscilloscope model PM 3384A Combiscope, Autoranging which is a commercially-available oscilloscope with maths suite and a printer output.

In Fig 2, with the sensor placed under the tyre of the vehicle, a single trace is obtained at a frequency of 102 hertz and with a peak-to-peak voltage of 14.0 millivolts. The frequency of the trace corresponds to twice the engine speed which is thus :

$$RPM = 102 \times 60/2 = 3060$$

In the Fig 2 embodiment, the application of vibrations to the elongated piezo-electric sensor element is by direct transfer of engine vibrations through the vehicle structure, and hence onwards through the relevant wheel and tyre, and thus into the elongated piezo-electric sensor element. The latter may be looped within the area of the footprint of the vehicle tyre, so as to achieve a greater length of sensor element to which vibrations are applied. In any case, whether or not a loop is used, the vibrations are applied to the cable-like sensor element through discrete portions of the tyre tread, whereby this loading is effectivly inputted to the sensor at spaced locations. It will be noted that this embodiment constitutes a simple precursor of the integrated drive-on sensor embodiment described below.

In the case of Fig 3, with the sensor placed on the bonnet or hood of the vehicle engine in a taut condition, again a single trace was obtained at a frequency of 61.4 hertz corresponding to an engine speed of 1842 RPM.

Fig 4, with the sensor placed on the outlet pipe of the radiator leading to the engine shows a frequency of 31.6 hertz and thus an engine speed of 948 RPM. Fig 5, with the sensor placed on the outlet pipe of the engine leading to radiator shows a double trace, with a dominant peak frequency of 89.3 hertz corresponding to an engine speed of 2679 RPM. Fig 6, obtained with the sensor on the fuel pipe inlet to the carburettor includes two traces with a dominant peak frequency of 32.9 hertz corresponding to an engine speed of 987 RPM, and Fig 7, again showing a double trace, and with a dominant peak frequency of 31.7 hertz indicates an engine speed of 951 RPM.

In the cases of Figs 3 and 4, the application of the vibrations to the sensor element is obviously made at discrete and relatively widely spaced locations thereon, and in accordance with the principle of effecting such loading and the corresponding related notional compression of the piezo-electric material at these spaced locations.

In the above cases, amongst other modifications which could be made by persons skilled in the art are changes in the construction and form of the piezo-electric sensor element, the analysis equipment connected thereto for determining the response thereof, and the presentation of the results, as described above with reference to Figs 2 to 7, and likewise also the locations for the sensor element itself in relation to the engine or structures connected thereto.

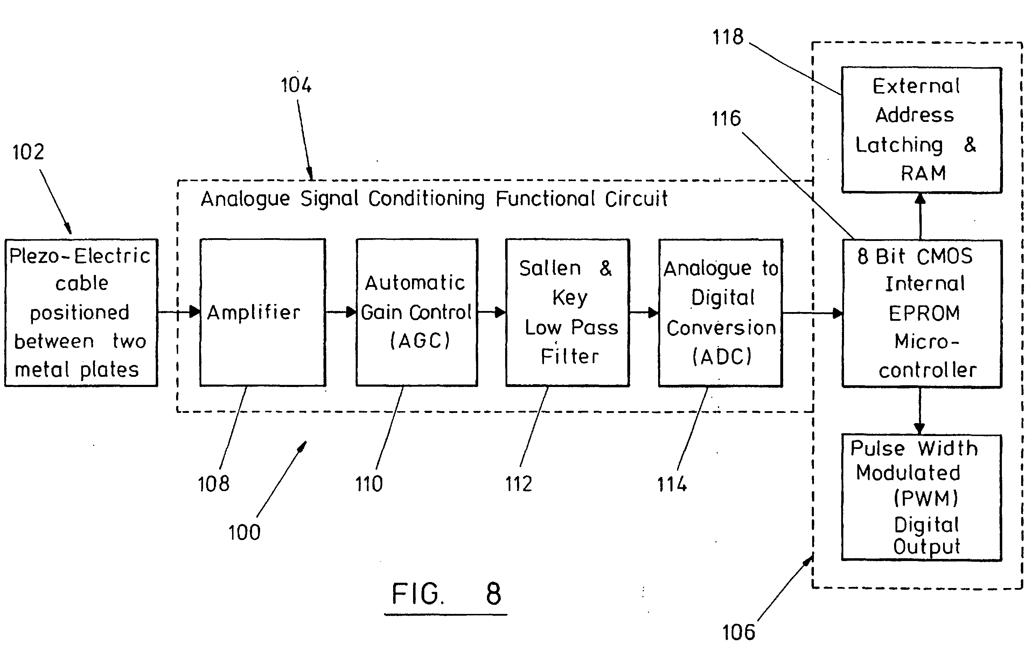

In the embodiment of Fig 8, the apparatus provides a "drive-on" tachometer facility for use, for example, in smoke measurement on automotive diesel engines. In this embodiment, the drive-on facility arises from the use of the apparatus in a manner such that the automotive vehicle is positioned above and in contact with the sensor means in order to sense and respond to the corresponding vibrational energy input from the vehicle's engine. Accordingly, the engine compartment of the vehicle does not need to be opened (in the case of cars and automobiles) and likewise in the case of trucks the cab does not need to be pulled forward for engine access.

Apparatus 100 for rotational machinery analysis, particularly RPM determination, comprises sensor means 102, signal conditioning means 104 and signal analysis means 106 adapted to produce a signal which can be displayed by display means such as the liquid crystal display 14 of the embodiment of Fig 1.

Sensor means 102 comprises a sensor element comprising a piezo-electric material. In this embodiment, the sensor element comprises a spiral of piezo cable (not shown) positioned between two loading plates (not shown). The length of the spiral of cable is 5 metres. In a modification, a plain sheet of piezo-electric material is provided in place of the cable. In order to apply the vibrational loading to the piezo-electric sheet at spaced locations, means is provided to enable the loading plates to make contact with the sheet at defined locations. This can be achieved by means of profiled (eg ribbed) contact formations (not shown). In the embodiment employing the cable-form element the piezo cable has a finite thickness of approximately 20 or 24 gauge, depending on the cable used, which allows the provision of spacers (not shown) between the loading plates to limit the load applied to the cable and thus to prevent irreversible compression of the cable under the heaviest trucks.

The piezo cable loading plates comprise 4 millimetre thickness sheet metal, preferably aluminium, in order to minimise distortion in use. The plates are of square format and mounted in parallel configuration. In the embodiment where a planar sheet of piezo-electric material is employed either or both of the plates may be formed with ribs for loading purposes. For example the ribs may be of general sinusoidal format defining ribs and corresponding grooves with a wave amplitude of 1 - 5 millimetres and a wave length of 2 - 10 millimetres.

In a modification, only one plate is used and the piezo-electric material is sandwiched between that plate and a solid surface eg a concrete floor or other surface in a test facility. The size of the loading plates may be of the order of 240 x 240 millimetres, so as to be suitable for most tyres, and so that only a minimum of one sixth of the area of the plate needs to be in contact with the vehicle tyre.

In use, it is important that the sensor element 102 is located under the wheel of the vehicle which is nearest the engine, or under one of the drive wheels of the vehicle, to maximise vibrational sensitivity.

Sensor means 102 produces a signal in response to engine vibrations which is passed to signal conditioning means 104.

Due to the characteristics of the signal produced by the piezo-electric sensor 102, a signal-conditioning function by circuit 104 is provided prior to analysis of the signal.

Accordingly, signal conditioning apparatus 104 comprises an amplifier 108 followed by an automatic gain control stage 110 which provides additional amplification and voltage-controlled attenuation. The output from the AGC stage passes to a Sallen & Key low pass filter 112 which windows the frequencies of most interest, which are those below 250 hertz. The resultant signal is subjected to an analogue-to-digital conversion step by ADC apparatus 114.

The resultant digital signal is passed to signal analysis means 106, to be described below.

Signal analysis means 106 comprises an 8 bit CMOS internal EPROM microcontroller which provides the signal analysis programme. The output from the piezo-electric sensor means 102 is sampled into an external RAM 118. The sampled data is subjected to a fast fourier transform and a peak search routine. Using a pulse-width modulated (PWM) digital output, the sampled frequency corresponds to the RPM of the engine in accordance with the following algorithm :-

RPM = (frequency of pulse modulated output x 120)

- 1.

Thus, for example, an 8 hertz PWM signal corresponds to an engine speed of 959 RPM.

The peak search routine performed by microcontroller 116 is chosen to operate over a window of frequencies from 300 to 1300 RPM at engine idle, and additionally over a frequency window of 1800 to 3600 RPM at maximum engine speed (diesel engine). Thus, the idle and maximum speeds can be recorded.

The peak search algorithm is as follows :-

```
Assume engine running
LOOP START
        Pause 5 secs
        Find largest peak in the range 8-20 Hz
        Output RPM = peak x 60
        Instruct rev engine to maximum
        Find largest peak in the range 30-60 Hz over
            5 sec period
        Output RPM = peak x 60
        Hold peak RPM on screen until reset
LOOP END
```

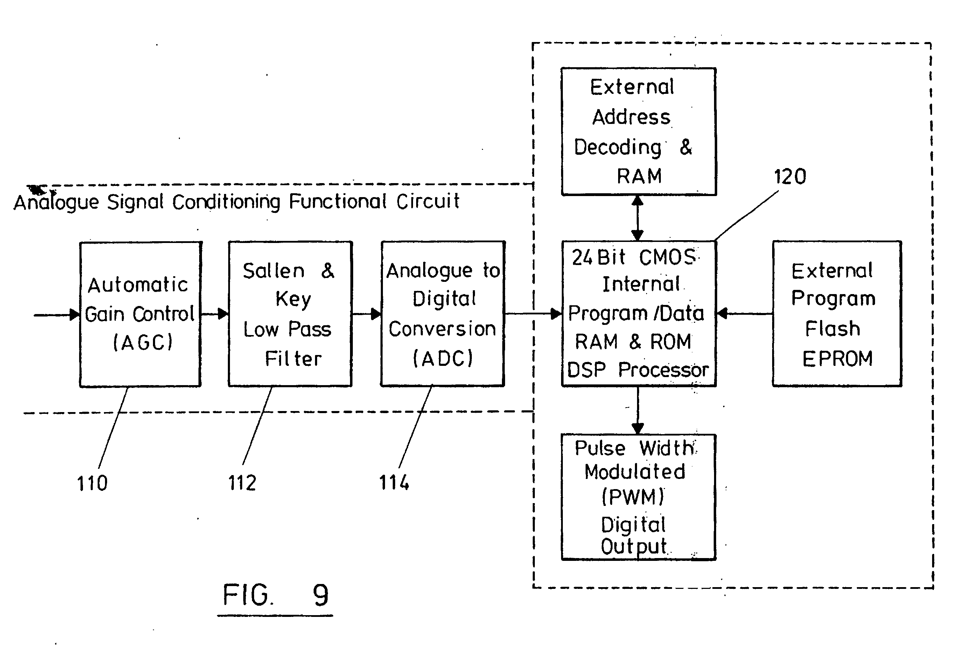

In the embodiment of Fig 9, which is otherwise constructed as described above in the embodiment of Fig 8, the microcontroller 116 is replaced by a digital signal processor in the form of a 24 bit CMOS DSP processor having an external additional nonvolatile flash EPROM for programme memory. Functional operation is substantially as described above in relation to Fig 8.

The above two embodiments have considerable practical significance in terms of their ability to provide a drive-on tachometer facility for trucks and the like which is of direct application to roadside diesel engine smoke tests.

## Claims

1. A method of rotational machinery analysis by use of sensor means during machine operation, the method comprising: -

    a) providing sensor means in the form of a sensor element comprising a piezo-electric material and adapted to sense and respond to an energy input from a rotational machine during machine operation;
    b) locating said sensor element with respect to said machine or with respect to a structure connected thereto so that said element is subjected to vibrations or movement produced by said machine during use;
    c) analysing the electrical or electronic output of said sensor element to relate said output to vibrational characteristics of said machine; and
    d) displaying a signal indicating or related to said vibrational characteristics;
        **characterised by**
    e) said method of analysis providing a drive-on tachometer facility for automotive vehicles wherein said sensor means is located below a tyre of a vehicle to sense vibrations from the engine thereof;
    f) said sensor element comprising piezo-electric material having said vibrations applied thereto to effect localised loading of said piezo-electric material, by means of a loading member located below a tyre of a vehicle to sense vibrations from the engine thereof, the method comprising the step of causing said localised loading of said piezo-electric material from said tyre through said loading member at spaced positions on said piezo-electric material.

2. A method according to claim 1 **characterised by** said sensor being adapted for said localised loading by said piezo-electric sensor element, being in the form of an elongated element of rope or cable or strand-like form so that said vibrations from said engine are applied.

3. A method according to claim 2 **characterised by** said elongated element being directly below said loading member, and the method comprising applying said vibrations to said piezo-electric element therefrom.

4. A method according to claim 1 or claim 2 or claim 3 **characterised by** said sensor element being adapted for said localised loading by means of said loading member having spaced surface formations to effect said localised loading, and the method comprising the step of loading said piezo-electric element accordingly.

5. A method according to claim 4 **characterised by** said loading member itself comprising a compressible material formed with surface formations and thereby adapted to effect said localised loading.

6. A method according to any one of the preceding claims **characterised by** said analysis step comprising evaluation of said response to said piezo-electric sensor element with respect to an electrical parameter selected from the group consisting of frequency output, amplitude output, dominant peak component output, voltage pattern output and power spectral density output of the piezo-electric element.

7. A method according to any one of the preceding claims **characterised by** said analysis step comprising a peak search routine with respect to the electrical or electronic output of said piezo-electric element.

8. Apparatus for rotational machinery analysis by use of sensor means during machine operation, the apparatus comprising:

a) sensor means in the form of a sensor element comprising a piezo-electric material and adapted to sense and respond to an energy input from a rotational machine during machine operations;

b) analysis apparatus connected to said sensor means and adapted to analyse the electrical or electronic output of said piezo-electric sensor element to relate said output to the vibrational characteristics of said machine;

c) display apparatus for displaying a signal indicating or related to said vibrational characteristics;

**characterised by**

d) said apparatus further comprising a loading member and providing a drive-on tachometer facility for automotive vehicles wherein said sensor means is adapted to be located, in use, below a tyre of a vehicle to sense vibrations from the engine thereof; and

e) said sensor element comprising piezo-electric material being adapted to have said vibrations applied thereto to effect localised loading of said piezo-electric material by means of said loading member adapted to be located, in use, below a tyre of a vehicle to sense vibrations from the engine thereof, the arrangement being such that said tyre causes said localised loading of said piezo-electric material through said loading member at spaced locations on said piezo-electric material.

9. Apparatus according to claim 8 **characterised by** said sensor element being in the form of an elongated element of rope, or cable, or having a strand-like form so that said vibrations from said engine are applied mechanically only to a portion of the external profile thereof, at said spaced positions.

10. Apparatus according to claim 9 **characterised by** said elongated element being located directly below said loading member which is adapted to apply said vibrations to the piezo-electric current.

11. Apparatus according to any one of claims 8 to 10 **characterised by** said sensor element being adapted for said localised loading by said piezo-electric material being located for application of said vibrations by said loading member having spaced surface formations to effect said localised loading.

12. Apparatus according to claim 11 **characterised by** said loading member itself comprising a compressible material formed with surface formations and adapted to effect said localised laoding.

13. Apparatus according to any one of claims 8 to 12 **characterised by** said apparatus being adapted to evaluate said response of said piezo-electric sensor element with respect to an electrical parameter selected from the group consisting of frequency output, amplitude output, dominant peak component output, voltage pattern output and power spectral density output of the piezo-electric element.

14. Apparatus according to any one of claims 8 to 13 **characterised by** said apparatus being adapted to effect analysis of the electrical or electronic output of said sensor element by a method comprising a peak search routine with respect to the electrical or electronic output of said piezo-electric element.

**Patentansprüche**

1. Verfahren zur Analyse von rotierenden Maschinen mit Hilfe von Sensormitteln während der Maschinenoperation, wobei das Verfahren die folgenden Schritte umfasst:

a) Vorsehen von Sensormitteln in Form eines Sensorelements, welches ein piezoelektrisches Material umfasst und so ausgelegt ist, dass es auf eine Energiezuführung von einer rotierenden Maschine während der Maschinenoperation anspricht und ein entsprechendes Antwortsignal erzeugt;

b) Anordnen des Sensorelements relativ zur Maschine oder zu einer mit dieser verbundenen Struktur in einer solchen Weise, dass auf das Element von der Maschine während ihres Einsatzes erzeugte Schwingungen oder Bewegungen einwirken;

c) Analyse des elektrischen oder elektronischen Ausgangssignals des Sensorelements zur Bestimmung einer Beziehung zwischen dem Ausgangssignal und Schwingungseigenschaften der Maschine; und

d) Anzeigen eines Signals, welches die Schwingungseigenschaften wiedergibt oder hierzu in Beziehung steht;

**dadurch gekennzeichnet, dass**

e) das Analyseverfahren die Bereitstellung einer befahrbaren Tachometereinrichtung für Kraftfahrzeuge umfasst, wobei das Sensormittel unterhalb eines Reifens eines Fahrzeugs so angeordnet ist, dass es auf vom Fahrzeugmotor kommende Schwingungen anspricht;

f) das Sensorelement piezoelektrisches Material umfasst, dem die Schwingungen zur Ausübung einer örtlich begrenzten Belastung des piezoelektrischen Materials mit Hilfe eines Lastelements zugeführt werden, welches derart unterhalb eines Fahrzeugreifens angeordnet ist, dass es auf vom Fahrzeugmotor kommende Schwingungen anspricht, wobei das Verfahren einen Schritt umfasst, in dem die örtlich begrenzte Belastung des piezoelektrischen Materials vom Reifen über das Lastelement an zueinander beabstandeten Positionen am piezoelektrischen Material hervorgerufen wird.

2. Verfahren nach Anspruch 1, **dadurch gekennzeichnet, dass** der Sensor durch das piezoelektrische Sensorelement für die örtlich begrenzte Belastung ausgelegt ist, indem das piezoelektrische Sensorelement derart in Form eines länglichen Seil- oder Kabelelements ausgebildet oder strangartig geformt ist, dass die vom Motor kommenden Schwingungen darauf einwirken.

3. Verfahren nach Anspruch 2, **dadurch gekennzeichnet, dass** sich das längliche Element direkt unterhalb des Lastelements befindet und das Verfahren die Zuführung der Schwingungen von diesem Lastelement zum piezoelektrischen Element umfasst.

4. Verfahren nach Anspruch 1, 2 oder 3, **dadurch gekennzeichnet, dass** das Sensorelement für die örtlich begrenzte Belastung ausgelegt ist, indem das Lastelement zur Ausübung der örtlich begrenzten Belastung zueinander beabstandete Oberflächenformationen aufweist, und dass das Verfahren einen Schritt umfasst, in dem das piezoelektrische Element entsprechend belastet wird.

5. Verfahren nach Anspruch 4, **dadurch gekennzeichnet, dass** das Lastelement selbst ein zusammendrückbares Material umfasst, an dem Oberflächenformationen ausgebildet sind und das hierdurch zur Ausübung der örtlich begrenzten Belastung ausgelegt ist.

6. Verfahren nach einem der vorhergehenden Ansprüche, **dadurch gekennzeichnet, dass** der Analyseschritt die Bewertung des Antwortsignals des piezoelektrischen Sensorelements bezüglich eines elektrischen Parameters umfasst, welcher aus einer Gruppe ausgewählt wird, die die Frequenz, die Amplitude, die dominante Spitzenkomponente, das Spannungsmuster und die Leistungsspektraldichte des Ausgangssignals des piezoelektrischen Elements umfasst.

7. Verfahren nach einem der vorhergehenden Ansprüche, **dadurch gekennzeichnet, dass** der Analyseschritt eine Spitzensuchroutine für das elektrische oder elektronische Ausgangssignal des piezoelektrischen Elements umfassf.

8. Vorrichtung zur Analyse von rotierenden Maschinen mit Hilfe von Sensormitteln während der Maschinenoperation, wobei die Vorrichtung die folgenden Bestandteile enthält:

   a) Sensormittel in Form eines Sensorelements, welches ein piezoelektrisches Material umfasst und so ausgelegt ist, dass es auf eine Energiezuführung von einer rotierenden Maschine während der Maschinenoperationen anspricht und ein entsprechendes Antwortsignal erzeugt;

   b) eine Analysevorrichtung, die mit den Sensormitteln verbunden und für die Analyse des elektrischen oder elektronischen Ausgangssignals des piezoelektrischen Sensorelements dazu ausgelegt ist, das Ausgangssignal zu den Schwingungseigenschaften der Maschine in Beziehung zu setzen;

   c) eine Anzeigevorrichtung zur Anzeige eines Signals, welches die Schwingungseigenschaften wiedergibt oder zu diesen in Beziehung steht;
   **dadurch gekennzeichnet, dass**

   d) die Vorrichtung zusätzlich ein Lastelement umfasst und eine befahrbare Tachometereinrichtung für Kraftfahrzeuge bietet, wobei das Sensormittel so ausgelegt ist, dass es im Einsatz unterhalb eines Reifens eines Fahrzeugs positioniert ist, um so auf vom Fahrzeugmotor kommende Schwingungen anzusprechen; und

   e) das piezoelektrisches Material umfassende Sensorelement so ausgelegt ist, dass ihm zur Ausübung einer örtlich begrenzten Belastung des piezoelektrischen Materials die Schwingungen mit Hilfe des Lastelements zugeführt werden, welches so ausgelegt ist, dass es im Einsatz unterhalb eines Reifens eines Fahrzeugs positioniert ist und so auf vom Fahrzeugmotor kommende Schwingungen anspricht, wobei die Anordnung derart gestaltet ist, dass der Reifen die örtlich begrenzte Belastung des piezoelektrischen Materials über das Lastelement an zueinander beabstandeten Positionen am piezoelektrischen Material hervorruft.

9. Vorrichtung nach Anspruch 8, **dadurch gekennzeichnet, dass** das Sensorelement in Form eines länglichen Seil- oder Kabelelementes ausgebildet oder strangartig geformt ist, so dass die vom Motor kommenden Schwingungen nur einem Bereich des äußeren Profils des Sensorelements an den zueinander beabstandeten Positionen mechanisch zugeführt werden.

10. Vorrichtung nach Anspruch 9, **dadurch gekennzeichnet, dass** das längliche Element direkt unterhalb des Lastelements angeordnet ist, welches so ausgelegt ist, das es die Schwingungen dem piezoelektrischen Strom zuführt.

11. Vorrichtung nach einem der Ansprüche 8 bis 10, **dadurch gekennzeichnet, dass** das Sensorelement für die örtlich begrenzte Belastung ausgelegt ist, indem das piezoelektrische Material so angeordnet ist, dass ihm die Schwingungen durch das zur Ausübung der örtlich begrenzten Belastung mit zueinander beabstandeten Oberflächenformationen versehene Lastelement zugeführt werden.

12. Vorrichtung nach Anspruch 11, **dadurch gekennzeichnet, dass** das Lastelement selbst ein zusammendrückbares Material umfasst, welches Oberflächenformationen aufweist und dazu ausgelegt ist, die örtlich begrenzte Belastung auszuüben.

13. Vorrichtung nach einem der Ansprüche 8 bis 12, **dadurch gekennzeichnet, dass** die Vorrichtung dazu ausgelegt ist, das Antwortsignal vom piezoelektrischen Sensorelement bezüglich eines elektrischen Parameters zu bewerten, welcher aus einer Gruppe ausgewählt wird, die die Frequenz, die Amplitude, die dominante Spitzenkomponente, das Spannungsmuster und die Leistungsspektraldichte des Ausgangssignals des piezoelektrischen Elements umfasst.

14. Vorrichtung nach einem der Ansprüche 8 bis 13, **dadurch gekennzeichnet**, das die Vorrichtung so ausgelegt ist, dass sie eine Analyse des elektrischen oder elektronischen Ausgangssignals des Sensorelements mittels eines Verfahrens durchführt, das eine Spitzensuchroutine für das elektrische oder elektronische Ausgangssignal des piezoelektrischen Elements umfasst.

## Revendications

1. Procédé d'analyse de machines tournantes par utilisation d'un moyen de détection pendant le fonctionnement de la machine, le procédé comprenant :

 (a) l'utilisation d'un moyen de détection sous la forme d'un capteur comportant une matière piézoélectrique et pouvant détecter et répondre à une entrée d'énergie provenant d'une machine tournante pendant le fonctionnement de la machine ;

 (b) le positionnement du dit capteur par rapport à la dite machine ou par rapport à une structure reliée à celle-ci, de sorte que le dit capteur est soumis à des vibrations ou à un mouvement engendré par la dite machine pendant l'utilisation ;
 (c) l'analyse de la sortie électrique ou électronique du dit capteur afin de corréler la dite sortie aux caractéristiques de vibration de la dite machine ; et
 (d) l'affichage d'un signal indiquant les dites caractéristiques de vibration ou lié à celles-ci ;
 **caractérisé en ce que**
 (e) le dit procédé d'analyse fournit une mesure tachymètrique pour véhicules automobiles par amenée du véhicule sur le dit moyen de détection, le dit moyen de détection étant placé sous un pneumatique du véhicule afin de détecter les vibrations de son moteur ;
 (f) le dit capteur comprend une matière piézoélectrique à laquelle les dites vibrations sont appliquées de manière à effectuer une charge localisée de la dite matière piézoélectrique, par l'intermédiaire d'un élément de charge placé sous un pneumatique du véhicule afin de détecter les vibrations de son moteur,

 le procédé comprenant l'étape d'application de la dite charge localisée de la dite matière piézoélectrique par le dit pneumatique, par l'intermédiaire du dit élément de charge, à des positions espacées sur la dite matière piézoélectrique.

2. Procédé selon la revendication 1, **caractérisé en ce que** le dit capteur, prévu pour recevoir la dite charge localisée sur le dit élément de détection piézoélectrique, est sous la forme d'un élément allongé tel qu'une corde ou un câble ou un cordon de sorte que les dites vibrations du dit moteur lui sont appliquées.

3. Procédé selon la revendication 2, **caractérisé en ce que**. le dit élément allongé est placé directement sous le dit élément de charge, et le procédé comprend l'application des dites vibrations au dit élément piézoélectrique à partir du dit élément de charge.

4. Procédé selon la revendication 1 ou la revendication 2 ou la revendication 3, **caractérisé en ce que** le dit capteur, prévu pour recevoir la dite charge localisée par l'intermédiaire du dit élément de charge, comporte des configurations de surface espacées de manière à effectuer la dite charge localisée, et le procédé comprend l'étape de charge du dit élément piézoélectrique de façon correspondante.

5. Procédé selon la revendication 4, **caractérisé en**

**ce que** le dit élément de charge comprend lui-même une matière compressible comportant des configurations de surface et pouvant donc effectuer la dite charge localisée.

6. Procédé selon une quelconque des revendications précédentes, **caractérisé en ce que** la dite étape d'analyse comprend l'évaluation de la dite réponse du dit capteur piézoélectrique en ce qui concerne un paramètre électrique choisi dans le groupe incluant une sortie de fréquence, une sortie d'amplitude, une sortie de composante de crête dominante, une sortie de configuration de tension et une sortie de densité spectrale d'énergie de l'élément piézoélectrique.

7. Procédé selon une quelconque des revendications précédentes, **caractérisé en ce que** la dite étape d'analyse comprend un programme de recherche de valeur maximale en ce qui concerne la sortie électrique ou électronique du dit élément piézoélectrique.

8. Appareil d'analyse de machines tournantes par utilisation d'un moyen de détection pendant le fonctionnement de la machine, l'appareil comprenant :

   (a) un moyen de détection sous la forme d'un capteur comprenant une matière piézoélectrique et prévu pour détecter et répondre à une entrée d'énergie venant d'une machine tournante pendant le fonctionnement de la machine ;
   (b) un appareil d'analyse connecté au dit moyen de détection et prévu pour analyser la sortie électrique ou électronique du dit capteur piézoélectrique de manière à corréler la dite sortie aux caractéristiques de vibration de la dite machine ;
   (c) un dispositif d'affichage pour afficher un signal indicatif des dites caractéristiques de vibration ou lié à celles-ci ;
   **caractérisé en ce que** :
   (d) le dit appareil comprend en outre un élément de charge et procure un instrument de mesure tachymètrique pour véhicules automobiles par amenée du véhicule sur le dit élément, le dit moyen de détection étant prévu pour être placé, en utilisation, sous un pneumatique du véhicule afin de détecter les vibrations de son moteur ; et
   (e) le dit capteur comprend une matière piézoélectrique et est prévu pour l'application des dites vibrations au dit capteur de manière à effectuer une charge localisée de la dite matière piézoélectrique au moyen du dit élément de charge qui peut être placé, en utilisation, sous un pneumatique du véhicule afin de détecter les vibrations de son moteur, l'agencement étant tel que le dit pneumatique engendre la dite charge localisée de la dite matière piézoélectrique, par l'intermédiaire du dit élément de charge, à des endroits espacés sur la dite matière piézoélectrique.

9. Appareil selon la revendication 8, **caractérisé en ce que** le dit capteur est sous la forme d'un élément allongé tel qu'une corde ou un câble ou un cordon de sorte que les dites vibrations du dit moteur sont appliquées mécaniquement seulement à une partie de son profil extérieur, aux dites positions espacées.

10. Appareil selon la revendication 9, **caractérisé en ce que** le dit élément allongé est placé directement sous le dit élément de charge qui est prévu pour appliquer les dites vibrations à l'élément piézoélectrique.

11. Appareil selon une quelconque des revendications 8 à 10, **caractérisé en ce que** le dit capteur, prévu pour la dite charge localisée de la dite matière piézoélectrique, est placé pour recevoir les dites vibrations par l'intermédiaire du dit élément de charge qui a des configurations de surface espacées, afin. d'effectuer la dite charge localisée.

12. Appareil selon la revendication 11, **caractérisé en ce que** le dit élément de charge est lui-même constitué d'une matière compressible présentant des configurations de surface permettant d'effectuer la dite charge localisée.

13. Appareil selon une quelconque des revendications 8 à 12, **caractérisé en ce que** le dit appareil est prévu pour évaluer la dite réponse du dit capteur piézoélectrique en ce qui concerne un paramètre électrique choisi dans le groupe comprenant une sortie de fréquence, une sortie d'amplitude, une sortie de composante maximale dominante, une sortie de configuration de tension et une sortie de densité spectrale d'énergie de l'élément piézoélectrique.

14. Appareil selon une quelconque des revendications 8 à 13, **caractérisé en ce que** le dit appareil est prévu pour effectuer une analyse de la sortie électrique ou électronique du dit capteur par une méthode comprenant un programme de recherche de valeur maximale en ce qui concerne la sortie électrique ou électronique du dit élément piézoélectrique.

FIG. 1

FIG. 2

FIG. 3

Volts

Time

FIG. 4

Volts

Time

FIG. 5

13

FIG. 6

FIG. 7

FIG. 8

102 — Plezo-Electric cable positioned between two metal plates

104 — Analogue Signal Conditioning Functional Circuit

108 — Amplifier

110 — Automatic Gain Control (AGC)

112 — Sallen & Key Low Pass Filter

114 — Analogue to Digital Conversion (ADC)

116 — 8 Bit CMOS Internal EPROM Micro-controller

118 — External Address Latching & RAM

106 — Pulse Width Modulated (PWM) Digital Output

100

EP 0 775 894 B1

15

Analogue Signal Conditioning Functional Circuit

External Address Decoding & RAM

120

Automatic Gain Control (AGC)

Sallen & Key Low Pass Filter

Analogue to Digital Conversion (ADC)

24 Bit CMOS Internal Program /Data RAM & ROM DSP Processor

External Program Flash EPROM

Pulse Width Modulated (PWM) Digital Output

110

112

114

FIG. 9